# EUROPÄISCHE PATENTANMELDUNG

(11) **EP 1 039 651 A2**
(43) Veröffentlichungstag der Anmeldung: **27.09.2000**
(21) Anmeldenummer: 99110133.8
(22) Anmeldetag: 25.05.1999
(51) Int. Cl.: H04B 1/38

(54) **Elektrische Steckverbinderbaugruppe zur Verbindung von flachen flexiblen Schaltungen mit diskreten elektrischen Anschlussklemmen**

(30) Priorität: 24.03.1999 DE 19913320
(71) Anmelder: pharmed Dr. Liedtke GmbH, 82031 Grünwald (DE)
(72) Erfinder: Liedtke, Rainer K. Dr., 82031 Grünwald b. München (DE); Liedtke, Alexander F., 82031 Grünwald b. München (DE)
(74) Vertreter: Pellmann, Hans-Bernd, Dipl.-Ing.

(57) **Zusammenfassung**

Ein Verfahren und Vorrichtung zur Inaktivierung sicherheitsgefährdender oder störender Kommunikationsgeräte oder Bestandteilen von diesen, insbesondere zur Verhinderung oder Reduzierung von Schadensrisiken oder Störungen durch Kommunikationsgeräte bei Menschen, Tieren und Maschinen.

Anwendungen sich sicherheitsrelevante Zonen wie Flugzeuge, Krankenhäuser oder störfrei zu haltende Zonen in denen Geräuschpegel niedrig gehalten werden sollen, z.B. Gerichte oder spezifische Erholungszonen z.B. Theater oder Oper.

## Beschreibung

Die Erfindung betrifft Vorrichtungen und Verfahren zur Inaktivierung sicherheitsgefährdender oder störender Kommunikationsgeräte oder Bestandteile von diesen, insbesondere zur Verhinderung und Reduzierung von Schadensrisiken oder Störungen durch Kommunikationsgeräte bei Menschen, Tieren oder Maschinen.

Es ist bekannt, daß zahlreiche technische Kommunikationsgeräte wie z.B. Mobiltelefone, Laptops oder CD-Laufwerke, in bestimmten Bereichen zu erheblichen technischen Funktionsstörungen anderer Geräte führen können. Dies ist beispietweise bei der Elektronik von Flugzeugen bekannt. Solche induzierten Funktionsstörungen beinhalten dort Risiken für die Flugsicherheit. Ebenso ist bekannt, daß Befindlichkeitsstörungen, durch aktive Kommunikationsgeräte erzeugt werden können, z.B. durch den Schallpegel von dessen Benutzem in Ruhezonen.
Um Störungen durch Kommunikationsgeräte auszuschalten gibt es verschiedene Ansätze. Ein solcher ist z.B. der c-guard der israelischen Firma NetLine. Dieses System besteht aus einem externen Störsender, der den Gebrauch von Mobilfunktelefonen einschränkt, indem er die Verbindung zwischen Telefon und Funktbasisstation trennt, und ist speziell für den eingeschränkten Gebrauch von Mobiltelefonen konzipiert. Solche Geräte verhindern jedoch nur Teilfunktionen, schließen eine Nutzung im eigentlichen Sinne aber nicht aus, denn der Benutzer kann das Gerät auch weiterhin aktivieren. Damit besteht die Gefahr, daß das Gerät weiterhin störenden Einfluss auf andere Geräte ausüben kann.
Der wohl gravierendste Nachteil besteht jedoch darin, daß diese Vorrichtungen alle gerätespezifisch sind und eine Kontrolle aller unterschiedlicher Kommunikationsgeräte, die als sicherheitsgefährdend angesehen werden, damit nicht möglich ist.

Der Erfindung liegt die Aufgabe zugrunde, Schadensrisiken oder Störungen durch Geräte bei Menschen, Tieren oder Maschinen zu verhindern oder zu reduzieren.

Diese Aufgabe wird dadurch gelöst, daß in zu sichernden oder störfrei zu haltenden Zonen eine oder mehrere technische Vorrichtungen angebracht sind, die gefährdenden oder störenden Kommunikationsgeräten oder Bestandteile von diesen solche spezifische Informationen übermitteln, durch die diese in der zu sichernden oder störfrei zu haltenden Zone inaktiviert werden, die dazu zu übermittelnde Information elektrisch, magnetisch, elektromagnetisch, chemisch, akkustisch, optisch, mechanisch oder biologisch ist oder eine Kombination hieraus darstellt, und das Kommunikationsgerät oder Bestandteile von diesem solche Vorrichtungen besitzen mit denen die spezifische Information in deren Inaktivierung umgesetzt wird und die nach Entfernung aus der zu sichernden oder störfrei zu haltenden Zone wieder eine Aktivierung der Funktionen ermöglichen, wobei die Kommunikationsgeräte oder deren Bestandteile Geräte sind, die zum optischen, akkustischen, magnetischen, elektrischen oder elektromagnetisch erfolgenden Informationsaustausch, oder einer Kombination hieraus, eingesetzt sind.

Um die Anwendung der Erfindung zu erweitern, werden in einer weitem Ausbildung der Erfindung als Kommunikationsgeräte oder deren Bestandteile. alle Geräte oder deren Bestandteile eingesetzt, die zur Aufzeichnung, Übertragung oder Wiedergabe von Ton und Bild, als Datenverarbeitungsgeräte oder Computer, als elektrische oder elektronische Spiele oder als Meßgeräte dienen.

Um die Anwendung der Erfindung zu erweitern, sind in einer weitern Ausbildung der Erfindung die Vorrichtungen zur Übermittlung der Information mobil oder flexibel an verschiedenen Standorten eingesetzt.

Um die Anwendung der Erfindung zu erweitern, wird in einer weiteren Ausbildung der Erfindung festgelegt, daß das sicherheitsgefährdende Gerät nach Verlassen des sicherheitsrelevanten Bereichs automatisch wieder aktiviert werden kann.

Die Vorteile der Erfindung bestehen darin, daß der Sicherheitsstandard objektiv automatisiert wird und damit nicht von subjektiver menschlicher Unzulänglichkeit abhängt. Dies ermöglicht ein maximales Maß an Sicherheit, bei gleichzeitiger erheblicher Kosteneinsparung, da Vorrichtung und Verfahren mit üblicher Technik leicht realisierbar ist.

Des weiteren bestehen die Vorteile in der Breite der Anwendungsbereiche und der Sinnfälligkeit des Anwendungsnutzens, der der derzeitigen Gesetzgebungsmaßnahmen entgegenkommt. So wirtd derzeit schon vor dem Gebrauch von bestimmten technischen Geräten gewarnt oder ist der Gebrauch von bestimmten technischen Geräten bereits gesetzlich verboten.

Ein neueres Beispiel dafür ist, die Novellierung des Luftverkehrsgesetzes, daß schon jetzt die Erfassung aller Arten von elektrischen Geräten als potentiell "gefährliche" Gegenstände für den Betrieb eines Luftfahrzeuges (Maßnahmenkatalog zur Verbesserung der Luftverkehrssicherheit), regeln soll. Schon jetzt sind die Luftverkehrsunternehmen aufgefordert, aus Sicherheitsgründen dafür Sorge zu tragen, daß Passagiere ihre Handys, CD-Player und Videokameras abschalten. Die Aktualität der Sicherheitsfragen, läßt sich auch auf nicht minder relevante Sicherheisbereiche, mit ebenfalls komplexen technischen Systemen wie z.B. Atomkraftwerke oder Krankenhäuser übertragen.

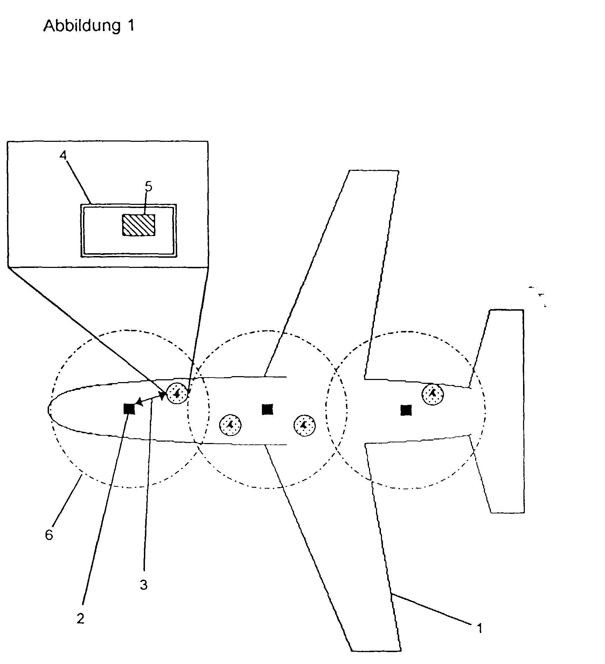

Ein Beispiel der Erfindung ist in Abbildung 1 dargestellt, ohne es hierauf beschränken zu wollen. In diesem Falle handelt es sich um am Kabinendach eines Flugzeuges (1) installierte Vorrichtungen (2), die spezifische Signale (3) vorgegebener Frequenz aussenden. Diese Signale führen im Kommunikationsgerät (4) zur Aktivierung eines Sensors (5) über den sowohl Einschaltung des Kommunikationsgerätes verhindert wird wie auch auch bei noch aktiven Geräten ein Trennvorgang von der Stromversorgung herbeigeführt wird. Nach Verlassen des Wirkungsradius (6) der installierten Vorrichtungen (2), ist der hemmende Sensor wieder deaktiviert, so daß das Gerät in seinen Funktionen wieder aktiviert werden kann.

Ein Verfahren und Vorrichtung zur Inaktivierung sicherheitsgefährdender oder störender Kommunikationsgeräte oder Bestandteilen von diesen, insbesondere zur Verhinderung oder Reduzierung von Schadensrisiken oder Störungen durch Kommunikationsgeräte bei Menschen, Tieren und Maschinen.
Anwendungen sich sicherheitsrelevante Zonen wie Flugzeuge, Krankenhäuser oder störfrei zu haltende Zonen in denen Geräuschpegel niedrig gehalten werden sollen, z.B. Gerichte oder spezifische Erholungszonen z.B. Theater oder Oper.

## Patentansprüche

1. Vorrichtung und Verfahren zur Inaktivierung von sicherheitsgefährdenden oder störenden Kommunikationsgeräten oder Bestandteilen von diesen, dadurch gekennzeichnet, daß in zu sichernden oder störfrei zu haltenden Zonen eine oder mehrere technische Vorrichtungen angebracht sind, die dem gefährdenden oder störenden Kommunikationsgerät oder Bestandteile von diesem solche spezifische Information übermitteln, durch die diese in der zu sichernden oder störfrei zu haltenden Zone inaktiviert werden, die dazu übermittelte Information elektrisch, magnetisch, elektromagnetisch, chemisch, akkustisch, optisch, mechanisch, oder biologisch ist oder eine Kombination hieraus darstellt, und das Kommunikationsgerät oder dessen Bestandteile solche Vorrichtungen besitzen mit denen die spezifische Information in deren Inaktivierung umgesetzt wird und diese nach Entfernung aus der zu sichernden oder störfrei zu haltenden Zone wieder eine Aktivierung der Funktion ermöglichen , wobei die Kommunikationsgeräte oder deren Bestandteile Geräte sind, die zum optischen, akkustischen, magnetischen, elektrischen oder elektromagnetisch erfolgenden Informationsaustausch oder einer hieraus bestehenden Kombination, eingesetzt werden.

2. Vorrichtung und Verfahren nach Anspruch 1, dadurch gekennzeichnet, daß Kommunikationsgeräte oder deren Bestandteile alle Geräte oder Geräteteile zur Aufzeichnung, Übertragung oder Wiedergabe von Ton und Bild, Datenverarbeitungsgeräte und Computer, elektrische oder elektronische Spielgeräte oder Messgeräte sind.

3. Vorrichtung und Verfahren nach vorhergehenden Ansprüchen , dadurch gekennzeichnet, daß die Vorrichtung zur Übermittlung der Information auch mobil oder flexibel an verschiedenen Standorten eingesetzt werden kann.

4. Vorrichtung und Verfahren nach vorhergehenden Ansprüchen, daß das sicherheitsgefährdende Gerät nach Verlassen des sicherheitsrelevanten Bereichs automatisch wieder aktiviert werden kann.
